# EUROPEAN PATENT APPLICATION

(11) **EP 1 752 845 A1**
(43) Date of publication of application: **14.02.2007**
(21) Application number: 06016441.5
(22) Date of filing: 07.08.2006
(51) Int. Cl.: G05B 19/406

(54) **Rotary table balance monitor**

(30) Priority: 09.08.2005 US 199700
(71) Applicant: Magus Intellectual Property GmbH, 6301 Zug (CH)
(72) Inventor: Kohring, Mark Douglas, West Chester OH 45069-1782 (US)
(74) Representative: Shaw, Matthew Nigel

(57) **Abstract**

A balance monitoring system utilizes existing Z-axis servo motor and control features of a machine tool to sense disturbances directly related to rotary table imbalance. It has been found that a Z- axis following error signal is the most noise free and most easily correlated axis control indictor. Since the Z-axis following error signal is already available using existing hardware and software, there is no need for additional transducers or devices. The balance monitoring of system can be used for three different purposes; for monitoring table balance at startup of the rotary table, for diagnosing table balance, and for in-process monitoring during a turning operation.

## Description

### Field of the Invention

The invention relates to a system for detecting a load imbalance in a rotary table, or in a workpiece carried by the rotary table, using a Z-axis following error signal.

### Background of the Invention

A travelling column machining center comprises a column that is mounted on a base and moves back and forth in the X direction. A machining spindle is mounted on the side of the column and moves up and down on the column in the Y direction. A workpiece may be fixed to a pallet that is mounted on a rotary table in front of the column. The rotary table allows the workpiece to be rotated relative to a tool mounted in the machining spindle so that various sides of the workpiece may be machined by rotating the table to the proper orientation. The rotary table, the pallet, and the workpiece may be moved in and out along the Z-axis by a Z-axis servo mechanism in order to feed the workpiece into the tool.

If the machine design allows the rotary table to rotate while being engaged by the tool, the machine operates like a lathe, with the workpiece rotating about the B-axis while being machined by the tool. Cutting a workpiece while the workpiece is being turned about an axis is called turning. When used in this mode, the turntable may rotate at speeds of up to 500 RPM. Since the combined weight of the pallet and workpiece may be in excess of 4000 lbs, any unbalance of this load can create vibrations in the rotating mass which can lead to accelerated wear of the rotary table mechanism. Additionally, the vibrations in an unbalanced load cause workpiece wobble, and as a result, the workpiece can be machined (turned) to an out-of-round shape.

A travelling column machining center utilizes a direct drive rotary table for multi-purpose milling and turning operations. Table imbalance, especially in turning applications, is an obvious concern due to the potentially large amount of kinetic energy associated with the rotating inertia of the pallet and workpiece. Calculations indicate that even modest table imbalance can cause significant circularity errors if the dynamic stiffness along the X- and Z-directions is substantially different. As a result, it would be desirable to provide a table balance monitoring system to address these concerns.

It is known in the prior art to provide accelerometers or strain transducers on a turntable or a machining spindle to detect vibrations in a rotating load or spindle. The accelerometer or strain transducer is connected to a programmable logic controller (PLC) and interfaces with the machine control to sound an alarm or shutdown operation in the case of excessive vibration. Known prior art systems using an accelerometer or strain transducer to detect vibrations in a turntable do not operate satisfactorily in the travelling column machining center described above. In addition, the accelerometer or strain transducer adds cost and complexity to the turntable mechanism.

### Objects of the Invention

It is accordingly an object of the invention to provide an in-process rotary table balance monitoring system for turning operations performed by a travelling column machining center using Z-axis following error signals. It is another object of the invention to provide a rotary table machining center with balance monitoring and machine control logic to provide cycle interrupt capabilities in the event that imbalance levels exceed predetermined limits.

It is another object of the invention to provide a balancing tool which identifies the amplitude and phase angle of measured table imbalance in a rotary table machining center.

### Brief Summary of the Invention

According to a first aspect of the invention, we provide a method for detecting a load imbalance in a rotary table, or in a workpiece carried by a rotary table, in which the table is mounted for linear movement along a linear axis relative to machine tool, the method comprising the steps of:
using a position command signal to position the rotary table along said linear axis by means of a servo mechanism;
   ]generating a position feedback signal indicative of the location of the rotary table after positioning by means of the servo mechanism;
generating a following error signal for said linear axis by subtracting the position feedback signal from the position command signal; and,
detecting disturbances in the following error signal indicative of the load imbalance.

According to a second aspect of the invention, we provide a method for using a servo mechanism to detect a load imbalance in a rotary table, or in a workpiece carried by a rotary table, in which the table is mounted for linear movement along a linear axis relative to machine tool, the method comprising the steps of:
using a position command signal to the servo mechanism to position the rotary table along said linear axis;
using the servo mechanism to generate a position feedback signal indicative of the location of the rotary table after positioning by the servo mechanism;
generating a following error signal for said linear axis by subtracting the position feedback signal from the position command signal; and,
detecting disturbances in the following error signal indicative of the load imbalance.

According to a third aspect of the invention, we provide a method of detecting an imbalance in a rotary table, in which the table is mounted for linear movement along a linear axis by means of a servo mechanism, the method comprising the steps of:
detecting the servo mechanism following error signal;
detecting a disturbance in the following error signal; and,
using the disturbance in the linear axis following error signal to indicate an imbalance in the rotary table.

The method may further comprise the steps of:
setting a predetermined limit for the magnitude of allowable disturbance in the linear axis following error signal;
determining if the disturbance in the linear axis following error signal exceeds said predetermined limit as the rotational velocity of the table is increased; and,
generating an alarm if the disturbance in the linear axis following error signal exceeds said predetermined limit.

The method may further comprise the steps of:
generating a velocity signal indicative of the speed of rotation of the rotary table;
comparing the velocity signal to a predetermined operational speed signal for the rotary table; and,
switching to a process monitor mode if the velocity signal exceeds the predetermined operational speed signal for the rotary table without generating an alarm.

According to a fourth aspect of the invention, we provide a method of diagnosing an imbalance in a rotary table, in which the table is mounted for linear movement along a linear axis by means of a servo mechanism, the method comprising the steps of:
generating a signal indicative of the B-axis velocity of the rotary table;
generating a signal indicative of the B-axis position of the rotary table;
detecting the servo mechanism following error signal;
detecting a disturbance in the following error signal; and,
generating a signal indicative of the peaks of the linear axis following error signal and correlating said peaks with the signal indicative of the B-axis position of the rotary table.

The method may further comprise the steps of:
generating a signal indicative of the amplitude of the peaks of the linear axis following error signal;
generating a phase display to indicate the phase of the imbalance and amplitude display to indicate the amplitude of the imbalance; and,
correlating the two displays to indicate the steps needed to balance the rotary table.

According to a fifth aspect of the invention, we provide a method of monitoring a turning operation in which a workpiece is rotated by means of a rotary table, a cutting tool engages the workpiece while it is rotating, and the table is mounted for linear movement along a linear axis by means of a servo mechanism while the workpiece is rotating, the method comprising the steps of:
generating a signal indicative of the B-axis velocity of the rotary table;
using the servo mechanism to move the rotary table along said linear axis;
detecting the Z-axis velocity of the rotating table;
detecting the servo mechanism following error signal for motion of the rotary table along the linear axis;
providing a limit signal for the servo mechanism following error signal;
detecting a disturbance in the following error signal; and,
comparing the disturbance in the following error signal to the limit signal.

The method may further comprise the steps of:
activating an alarm if the following error signal exceeds the limit signal.

According to the invention, a balance monitoring system includes existing Z-axis servo motor and control features of a machine tool to sense disturbances directly related to rotary table imbalance. Using existing machine tool hardware and software is more cost effective than using separate transducers, signal conditioning, and PLC devices. The required elements of the balance monitoring system are normally included in a machine control system, but have not been utilized for this purpose. It has been determined that a Z- axis following error signal is the most noise free and most easily correlated axis control indictor. Since the Z-axis following error signal is already available using existing hardware and software, there is no need for additional transducers or devices.

With the proposed balance monitoring system, the ability to use a machine's own axis feedback signals as sensing elements provides several advantages over an external monitoring system adapted for a machine. For example, there are no additional sensor and signal conditioning hardware costs, and a software interface of the Z-axis following error sensing signal to a machine application interface (MAI) is already provided.

### Brief Description of the Several Views of the Drawing

Specific and non-limiting examples of the invention will now be shown, strictly by way of example only, by reference to the accompanying drawings, of which:
Figure 1 shows a travelling column machining center fitted with a rotary table.
Figure 1A is a flow diagram of a machine control routine illustrating Z-axis control and following error.
Figure 2 is a plot of table spindle speed as a rotary table is brought from zero to 500 RPM with only a balanced pallet on the table.
Figure 3 is a plot of a Z-axis following error signal, with a pallet only on the table, as the speed of the rotary table of Figure 2 is increased from 0-500 RPM.
Figure 4 is a flow diagram of a signal processing routine performed on the Z-axis following signal during table start-up.
Figure 5 is a plot of table spindle speed as a rotary table is brought from 0-500 RPM with an offset weight on the table.
Figure 6 is a plot of the Z-axis following error signal and the output of a frequency tracking RMS detector as the table of Figure 5 is brought up to 500 RPM.
Figure 7 is a flow diagram of a signal processing routine used on the Z-axis following error signal for a rotary table that is out of balance.
Figure 8 shows a plot of a Z-axis position command and a plot of position feedback for Z-axis movement that may occur during a typical turning operation.
Figure 8A shows an enlarged view of a portion of the plots of Figure 8.
Figure 9 shows the Z-axis following error signal with steps associated with the Z-axis movement shown in Figure 8.
Figure 10 shows one embodiment of a signal processing routine that could be used during a typical turning operation.
Figure 11 shows the following error signal and the output of a frequency tracking RMS detector after the signal is filtered to remove the step offsets caused by the Z-axis movement in the example of Figures 8 and 9.

### Detailed Description of Specific and Non-Limiting examples of the Invention

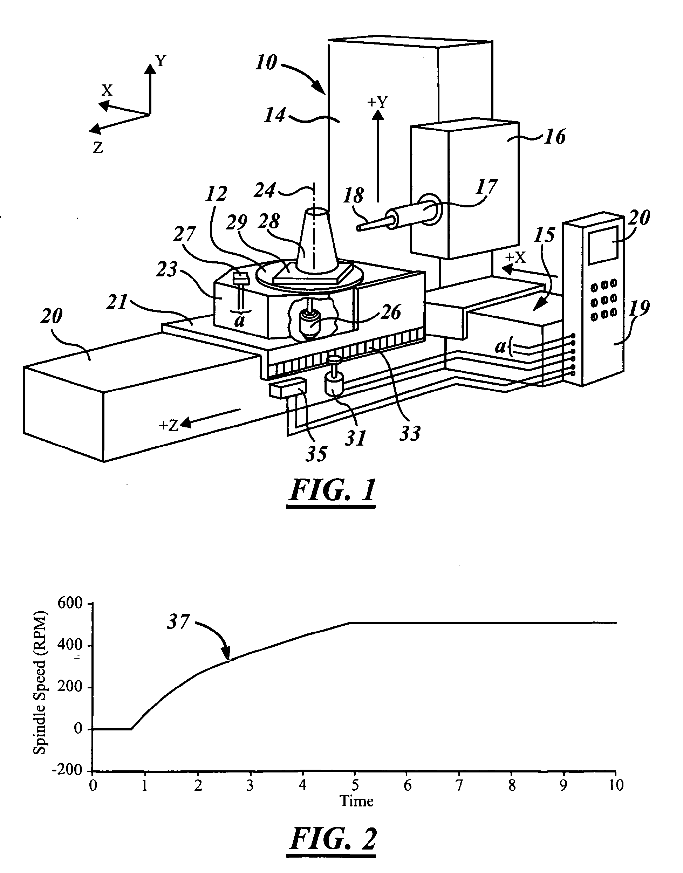

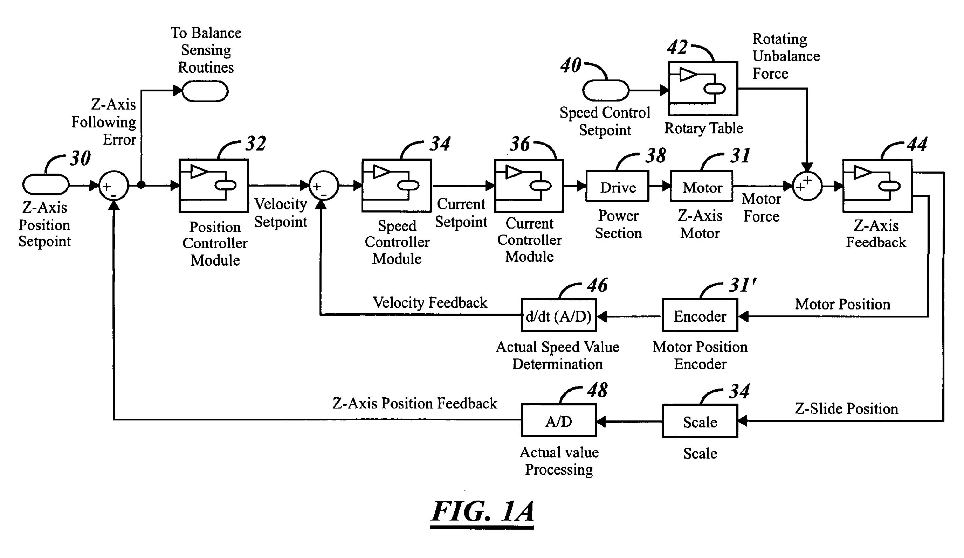

Turning now to the drawing figures, Figure 1 shows a machine tool or travelling column machining center 10 fitted with a rotary table 12. A travelling column 14 is mounted on a base 15 and moves back and forth in an X direction along an X-axis. A spindle carrier 16 is mounted on the side of the column 14 and the carrier 16 moves up and down on the column 14 in a Y direction along a Y-axis. A spindle 17 having a horizontal axis is mounted on the spindle carrier 16. A rotary cutting tool 18 is mounted on the spindle 17.

The machining center 10 may be a rotary table multi-axis machining center, such as a Geminex H5 series machining center available from Cincinnati Machine of Hebron, Kentucky. The machining center 10 may be controlled by a CNC controller 19, such as a Siemens Sinumerik 840D coupled to an output display 20. The controller 19 preferably runs HMI, version 6.03 operating system and NCU version 6.05 software. Those of ordinary skill in the art of machine tool design and programming will recognize that the controller 19 includes one or more suitable computer processors (not shown) that may be interfaced with one or more suitable computer memory devices which may be configured to provide at least temporary storage of data and/or computer software that provides at least some of the functionality of the system and that may be executed by the processor(s). Those of ordinary skill in the art will also recognize that the computer software may include, but is not limited to routines, modules, objects, components, data structures, and the like, for performing particular tasks associated with the invention.

A portion 20 of the base 15 extends in front of the column 14 along the Z-axis and carries a saddle 21. A turntable base 23 is mounted on the saddle 21 and the rotary table 12 is mounted on the base 23 and may be rotated about a vertical B-axis 24. The rotary table 12 is driven by a table spindle 26 located in the turntable base 23. The table spindle 26 is in a direct drive relationship with the rotary table 12, and has an axis of rotation that is coincident with the axis of rotation 24 (B-axis) of the table 12. A B-position sensor 27, such as an absolute rotary encoder, monitors the B-axis position of the rotary table 12 and is coupled to the controller 19.

A workpiece 28 may be fixed to a pallet 29 that is mounted on the rotary table 12. The rotary table 12 allows the workpiece 28 to be rotated relative to the tool 18 mounted in the spindle 17 so that various sides of the workpiece 28 may be machined by rotating the table 12 to the proper orientation. The saddle 21 carrying the rotary table 12, the pallet 29, and the workpiece 28 may be moved in and out on the forward portion 20 of the base along the Z-axis by a Z-axis servo mechanism in order to feed the workpiece 28 into the tool 18 carried by the machining spindle.

A Z-axis positioning system includes a Z-axis servo mechanism, which comprises a drive motor 31 that engages a drive mechanism 33 coupled to the saddle 21. The drive motor 31 receives drive signals from the CNC controller 19 that is programmed to supply drive signals to the drive motor 31 in order to move the workpiece 28 in and out along the Z-axis so that the workpiece 28 is machined in the desired way. The Z-axis positioning system also includes a position sensor 35, which may be at least partially mounted on the saddle 21 to provide a feedback signal to the CNC controller 19 indicative of the position of the saddle 21 on the base portion 20 along the Z-axis. The position sensor 35 may be a position transducer and may also be mounted in any other suitable fashion to the machining center 10 so as to indicate the actual position of the movable saddle 21 relative to the base portion 20 along the Z-axis. As just one of many other examples, the position sensor 35 may be a position encoder device (not shown) integrated into the servo motor 31. In another example, the position sensor 35 may be integrated into a linear scale device (not shown) between the saddle 21 and base portion 20. Those of ordinary skill in the art will recognize that there are many ways of sensing Z-axis movement of the saddle 21 relative to the base portion 20 along the Z-axis, all of which are encompassed herein.

The servo motor 31 receives a Z-axis command or set-point signal from the controller 19 to position the saddle 21 and rotary table 12 along the Z-axis, and the controller 19 receives an actual Z-axis position signal from the position sensor 35. In general, a "following error signal" is the difference between the commanded position of an element which is being driven to a position by a servo mechanism and the actual position of the element. More specifically, the Z-axis following error signal is normally monitored so that the control system 19 knows if the saddle 21 is at the desired commanded position along the Z-axis, or if additional travel is required before the saddle 21 reaches the commanded position. In the example shown, the Z-axis following error signal is the difference between the commanded position signal transmitted to the servo motor 31 by the CNC controller 19 and the position signal received by the CNC controller 19 from the position sensor 35 of the Z-axis positioning system.

It has been determined that the servo motor 31 and control system 19 that is used to position the saddle 21 along the Z-axis can be used to sense vibration in the rotating workpiece 28 and pallet 29. An imbalance in the rotating mass causes a vibration that is picked up in the Z-axis following error signal. Balance monitoring of the rotary table 12 can be performed for three purposes; for monitoring table balance at startup of the rotary table, diagnosing table balance, and in-process monitoring during a turning operation.

Figure 1A illustrates a Z-axis machine control and following error routine. At any given time during execution of a machine control program by the controller 19, a desired position of the saddle 21 along the Z-axis may be specified using a Z-axis position set point 30. A position control module 32 may use the set point 30 to yield a Z-axis velocity set point signal, which is used by a speed controller module 34 to yield a current set point signal. The current set point signal is used by a current controller module 36 to supply a suitable electrical current level to a motor drive 38 that is used to power the Z-axis motor 31. In turn, the motor 31 imparts a motor force to the Z-axis. Also imparted to the Z-axis is a potentially unbalanced rotational force caused by rotation of the rotary table 12, as a result of a rotary table speed control set point 40, which is used by a rotary table control module 42 that controls operation of the table motor 26.

Still referring to Figure 1A, a Z-Axis feedback module 44 communicates a signal indicative of actual rotational velocity of the Z-axis motor 31 as input to, and for use by, the speed controller module 34. In this regard, a motor encoder 31' is used in combination with an analog to digital (A/D) module 46 to produce the Z-axis motor speed feedback signal. The motor encoder 31' may be integral to motor 31 as well known in the art, or may be a separate encoder device. In further reference to Figure 1A, the Z-axis feedback module 44 communicates a signal indicative of actual position of the Z-axis (saddle 21 relative to base portion 20) as input to, and for use by, the position controller module 32. The actual position feedback signal is also used in comparison to the commanded Z-axis position set point to yield the Z-axis following error. In this regard, the position sensor 34 (such as a linear scale) is used in combination with an A/D converter 48 to produce the Z-axis position feedback signal.

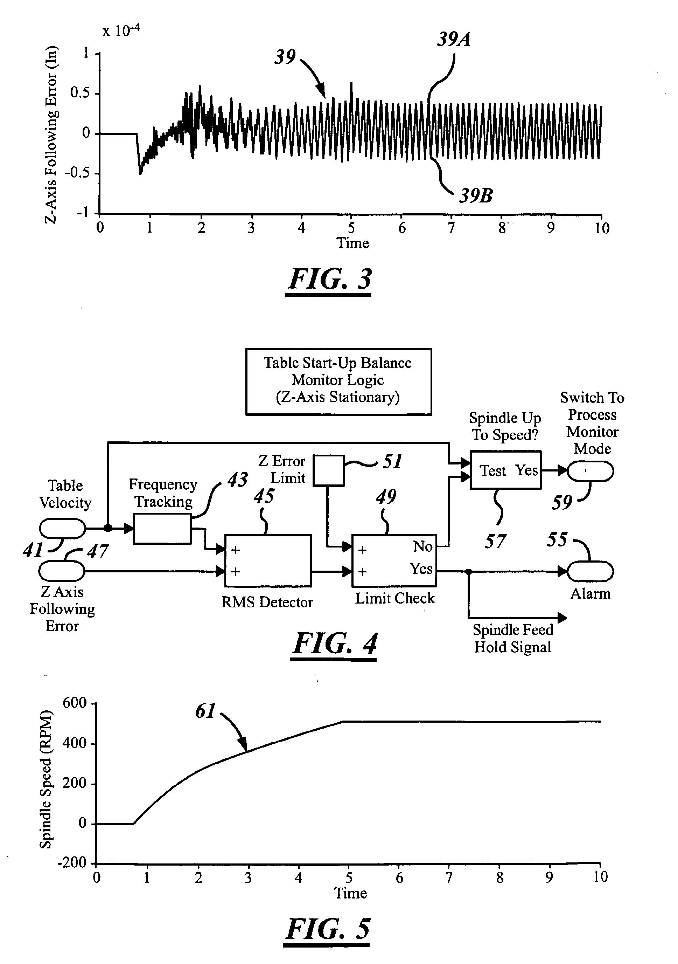

Figure 2 is a plot of table spindle speed 37 as a rotary table 12 is brought from zero to 500 RPM with only a balanced pallet 29 on the table.

Figure 3 is a plot of the Z-axis following error signal 39 with respect to time, with the balanced pallet 29 on the rotary table 12 only, as the table spindle speed is increased from 0-500 RPM in accordance with the plot of Figure 2. Even with a "balanced" pallet 29, the Z-axis following error signal is able to detect a once-per-revolution vibration with a peak-to-peak amplitude measured from 39A to 39B of about 0.7 x 10⁻⁴ inches. As described below, the vibration amplitude increases as an offset weight is added to the pallet 29. The vibration detected using the Z-axis following error signal correlates well with external vibration readings taken of the same rotating mass with an independent vibration detector.

Figure 4 is a flow diagram of a signal processing logical routine that is performed using the Z-axis following error signal during spindle start-up of an unloaded table. A table rotational velocity signal 41 is fed into a frequency tracking module 43. By sensing table speed from separate control indicators, the period T (or inverse of the frequency) may be determined. Exemplary computer code for the frequency tracking module 43 is provided below. 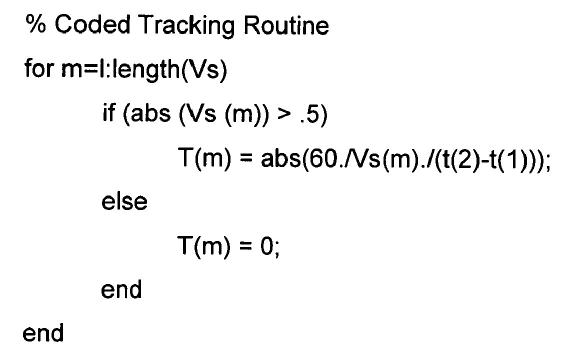 where:
Vs = spindle velocity (rpm)
t = sampling time (sec)
T = # of samples / table rev

The output signal, i.e. period T, from the frequency tracking module 43 is fed into a root mean square (RMS) detector module 45. The RMS detector module 45 also uses the Z-axis following error signal 47 received by the CNC controller 19 from the Z-axis positioning system. The RMS detector module 45 preferably performs a true RMS calculation by taking a square root of a sum of squares. In general, the resulting value will be in a standard unit of measure for vibration, namely distance-rms. In one specific example, the resulting value may be in units of in-rms, in the case that following error is measured in inches. Exemplary computer code used in the RMS detector module 45 is provided below. 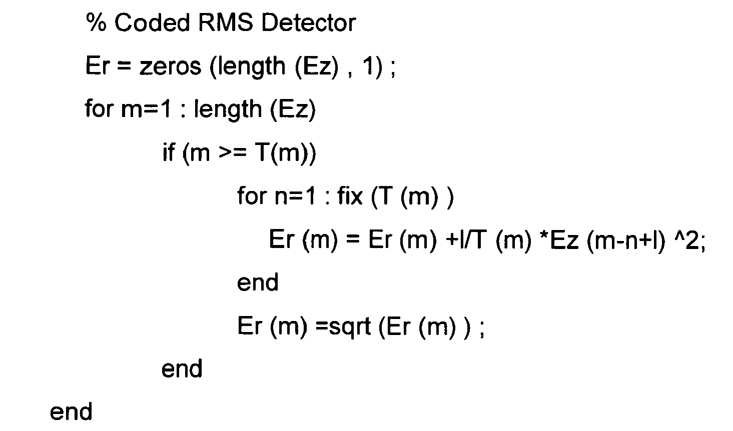 where:
Ez = measured following error (in)
Er = Tracked RMS detect. level (in)
T = number of samples per table rev

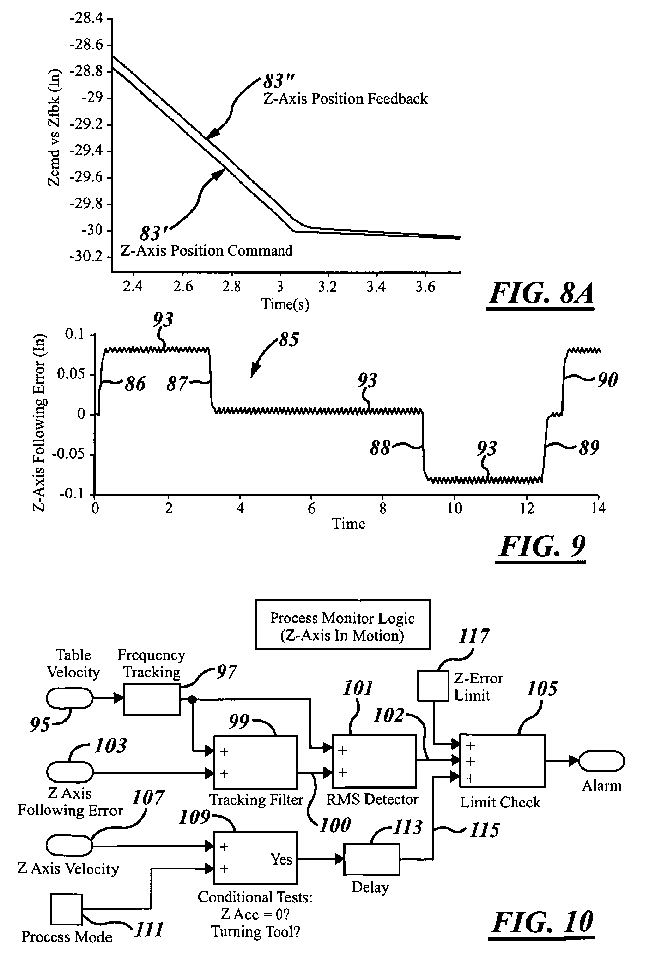

The output signal from the RMS detector module 45 is applied to a limit check module 49. The limit check module 49 receives the RMS output signal and also receives a Z-Error Limit signal from a Z-Error Limit setting device or module 51. The limit check module 49 compares the signal from the RMS detector module 45 to the signal from the Z Error Limit setting device or module 51. If the signal from the Z-Error Limit setting device or module 51 is exceeded by the output from the RMS detector 45, the limit check module 49 applies a signal to an alarm 55. If the signal from the Z-Error Limit setting device or module 51 is less than the output from the RMS detector module 45, the limit check module 49 applies a signal to a test module 57 that also receives the table velocity signal 41. The test module 57 determines if the table 12 is up to speed, and if it is, the logic switches to the process monitor mode 59, as will be described with reference to Figure 10.

Figure 5 is a plot of table spindle speed 61 as a rotary table 12 is brought from zero to 500 RPM with a thirty-four pound weight offset 5.4 inches from the axis of rotation 24.

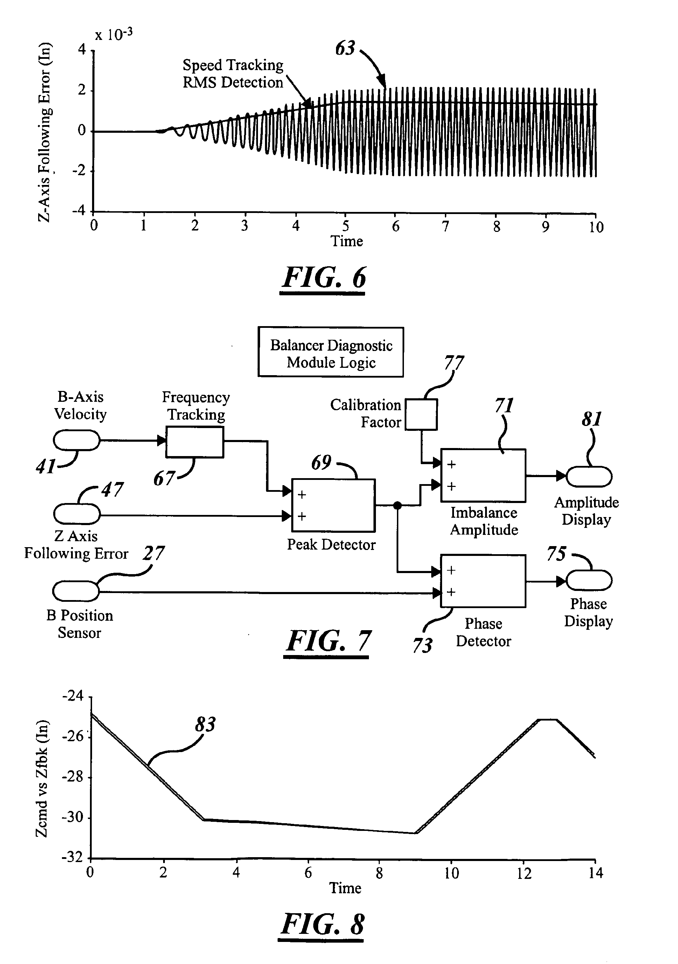

Figure 6 is a plot of the Z-axis following error signal 63, and the detected RMS signal 64, with respect to time as the rotary table 12 with the thirty-four pound eccentric weight is brought up to 500 RPM. The Z-axis following error signal 63 is used to detect a once per revolution vibration with a peak to peak amplitude of about 2.0 x 10⁻³ inches.

With the Z-axis stationary, the Z-axis following error signal and table velocity are tracked, and both signals are processed by the speed tracking RMS detector 45 as shown in Figure 4. If the RMS vibration amplitude exceeds the pre-set Z-axis error limit as determined in the limit check 49, the alarm signal 55, along with a spindle feed-hold signal, is issued. An operator can then run the balancer diagnostic module routine or logic as shown in Figure 7 for assistance in manual table balancing.

Figure 7 shows the balancer diagnostic module logic that is used after the table 12 has been identified as being out of balance. The MAI may be used to run the table 12 at a pre-determined balance test speed and to call the balancer diagnostic logic, which gives the user guidance in determining how much imbalance exists (magnitude), and at what location on the table 12 a balance correction needs to be made (direction).

Preferably, the user uses the MAI to place the table 12 in a contouring mode when detecting B-axis position (the angular position of the rotary table relative to the B-axis), which is used by the balancer diagnostic logic. The table position and following error is synchronously sampled in the balancer diagnostic module logic of Figure 7 to correctly locate the imbalance position on the table 12.

Also, the table feedback resolution may need to be reduced in the balancer diagnostic routine only, in order to allow the axis to rotate faster for balancing in the contouring mode. Those of ordinary skill in the art will recognize that positioning feedback systems usually require a higher number of feedback pulses per revolution than velocity feedback systems because of the different respective angular accuracies required. It will also be recognized that position controllers typically have slower sampling times than velocity controllers because of the "nested" nature of computer program loops, i.e. the "slower" position loop must be closed around a "faster" velocity loop to maintain operational stability. Greater feedback pulses combined with slower sampling times tends to result in a process constraint in the form of some upper limiting speed. The rotary table cannot be operated in contouring mode (i.e. position control) above the upper limiting speed, which is below the maximum operating speed in spindle mode (i.e. velocity control). Given this process constraint, and because it is desirable to measure angular position for the balancer diagnostic routine, it may be necessary to temporarily lower the resolution of the positioning feedback to allow balance checks to be performed at higher speeds than would normally be allowed under standard positioning control. For example, this could be accomplished by invoking an alternate servo parameter set when the balancing diagnostic routine is called.

As shown in the logic diagram of Figure 7, the B-axis velocity 41 (table RPM) is applied to a frequency tracking module 67, which may be similar to that described above. The output of the frequency tracking module 67 is applied to a peak amplitude detector 69. The Z-axis following error signal 47 is also applied to the peak amplitude detector 69. The peak amplitude detector 69 is different from the RMS detector 45 in that the peak amplitude detector 69 identifies a maximum value of vibration that the signal reaches during a given period, whereas the RMS detector 45 only identifies an RMS average value.

The output of the peak amplitude detector 69 is applied to an imbalance amplitude detector 71, and to a phase detector 73. The phase detector 73 also receives a signal from the B-position sensor 27 indicative of the B-axis (angular) position of the table 12. The imbalance amplitude detector 71 also receives a calibration factor 77 signal in order to scale the peak following error (displacement) amplitude into a corresponding load unbalance (moment) condition. The output of the imbalance amplitude detector 71 is displayed on an amplitude display 81, such as via the MAI.

The phase detector 73 preferably runs in synchronization with the peak amplitude detector 69 to identify when in a given vibration period the peak vibration actually occurs. The angular position of the B-axis is preferably recorded at the same instant in time that the Z-axis following error reaches its peak value. Those of ordinary skill in the art will recognize that further manipulation of this angular position by a previously determined transmissibility relationship of a known unbalanced load is used to transpose the phase angle at peak vibration into a corresponding phase angle of the unbalanced load. Those of ordinary skill in the art will also be familiar with methods of determining the transmissibility relationship between vibration amplitude and unbalance moment using a trial weight or load.

The phase detector 73 preferably outputs the unbalance in terms of a moment in Ib-in to a phase display 75 (e.g. of the MAI) of the rotary table position relative to a pre-defined B=0, i.e. numerical "zero degree" location, thereby instructing the user how much compensating weight to put at a certain radius and angular position in order to achieve a state of balance. Those of ordinary skill in the art will recognize that, for programming purposes, some reference orientation of each machine axis must be pre-defined in basic machine parameters at the time of machine commissioning. For example, the B=0 position may be set to correspond with the alignment of a marker on the rotary table 12 with the axis of the machine spindle 17. It is envisioned that the balance module would identify the location of unbalance relative to this pre-defined "zero degree" orientation.

In operation, when using the invention as a balancer diagnostic module as shown in Figure 7, the Z-axis saddle 21 has no motion along the Z-axis and the table 12 is rotating at a pre-determined balancing speed. The table velocity and Z-axis following error signal are tracked and processed by the peak amplitude detector 69 to determine vibration amplitude. The amplitude of the following error signal can be scaled, based on tests performed with known trial weights, by a factor that converts Z-axis displacement at a given frequency to pound-inches or Newton-meters of imbalance moment. In other words, movement of the Z-axis can be empirically correlated to amplitude. Once peak amplitude has been determined, the rotational or angular position of the table 12 corresponding to the measured peak amplitude is determined and may be saved to memory in the controller 19. If required, this saved value can be offset by a pre-determined phase shift to align the actual imbalance location on the table with the measured table angle. In other words, the saved value can be corrected for any inaccuracies due to time lag between sensing and processing, or the like. Results can be output to the CNC display 20 indicating where and how much weight to apply in order to balance the table. Exemplary computer code for peak amplitude detection is provided below. 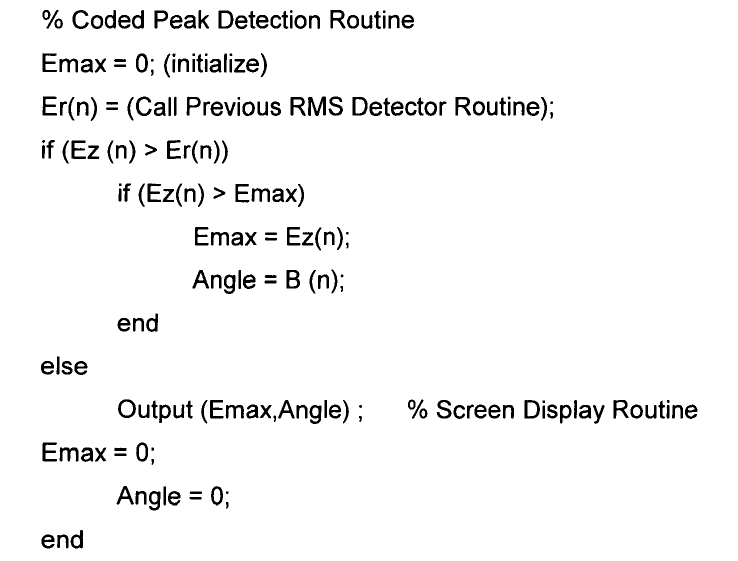 where:
Ez = measured following error (in)
Er = Tracked RMS detection level (in)
Emax = detected peak amplitude (in)
Angle = detected table angle (deg)

The most difficult application of balance monitoring is during processing such as workpiece contouring when the saddle 21 is also in motion along the Z-axis. Figure 8 shows the Z-axis position command and position feedback signals 83' and 83", respectively, versus time for a typical Z-axis movement that might occur during a typical turning application. Figure 8A illustrates an enlarged view of a portion of the plots of Figure 8, for clarity. Figure 8A illustrates a Z-axis position command signal 83' and a Z-axis position feedback signal 83". The feedback signal 83" does not show the oscillatory motion of the Z-axis because of the relatively coarse resolution plotted. The corresponding Z-axis following error signal 85, which is the difference between the command and feedback signals 83' and 83" shown in Figure 8A, is shown in Figure 9, and contains steps 86-90 associated with acceleration and deceleration of the saddle along the Z-axis. The plot of Figure 9 also shows the oscillatory motion of the Z-axis because of the relatively fine resolution of the plot. The movement that is displayed involves a "rapid positioning" of the saddle 21 at 100 inches per minute in its approach to the cutting spindle from zero to 3 seconds, followed by a slow feeding of the part into the cutting tool at 6 inches per minute from 3 to 9 seconds, followed by a "rapid retract" of the saddle away from the cutting spindle at 100 inches per minute.

The Z-axis following error signal is offset throughout constant velocity motion, and inversely proportional to position loop gain. Those of ordinary skill in the art will recognize that position loop gain Ku may be in units of in/min/mil, wherein a mil is 0.001" or 1000/min. Position loop gain Kv is preferably a gain setting defined in the position controller module 32 of Figure 1A. An oscillatory vibration component 93 due to table imbalance is present in the signal, but the amplitude is relatively small compared to the step offsets 86-90 due to constant velocity following error. The oscillatory vibration component 93 is present but not visible in the feedback signal 83" of Figure 8A, because of the scale of the Figure 9 plot.

Figure 10 shows one embodiment of a process monitoring logical routine that could be used during a typical turning application when the saddle 21 is in motion along the Z-axis. The logic uses the Z-axis following error signal along with table spindle speed to perform RMS tracking of vibration amplitude. In this case however, the Z-axis following error signal is filtered, as described below, in order to remove the step offsets as shown in Figure 9 caused by the Z-axis motion.

The rotational table velocity 95 is applied to a frequency tracking module 97, the output of which is applied to a tracking filter 99 and an RMS detector 101. The Z-axis following error signal 103 is also applied to the tracking filter 99. The tracking filter 99 passes only those frequencies higher than the spindle imbalance frequency or those frequencies in a band centered around the spindle imbalance frequency. Exemplary computer code used in the tracking filer 99 is provided below. 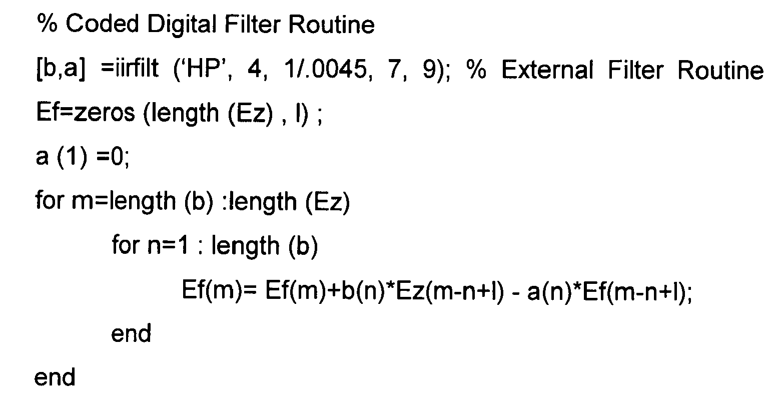 where:
Ez = measured following error (in)
Ef = filtered following error (in)
[b,a] = IIR filter coefficients (Note: a routine
for determining filtering coefficients can be coded, but it is hoped that a lookup table containing pre-determined values might be used instead to minimize processing times.)

The output 100 of the tracking filter 99 provides a second input to the RMS detector 101, which applies an output signal 102 to a limit check module 105. The Z-axis velocity signal 107 may be derived from the Z-axis position sensor 35 and is applied to a conditional test module 109 to determine if there is Z-axis motion and/or acceleration, and a signal from a process mode module 111 is applied to the conditional test module 109 to determine if the machine is operating in a mode in which table vibration needs to be monitored. For example, it may be desirable to generate a signal from the process mode module 111 only if the machine is "in-cycle" running an NC program with the table 12 turning or rotating. In such an example, for all other conditions, the process mode module output would be false. A suitable delay is determined, depending on the output signal from the conditional test module 109 by the delay module 113. The delay from the conditional test module 109 is applied on line 115 to the limit check module 105, and a Z-error limit signal 117 is applied to the limit check module 105. If the Z-error limit signal 117 is exceeded by the output from the RMS detector 101 after taking into account the delay determined from the conditional test module 109, an alarm 119 is activated.

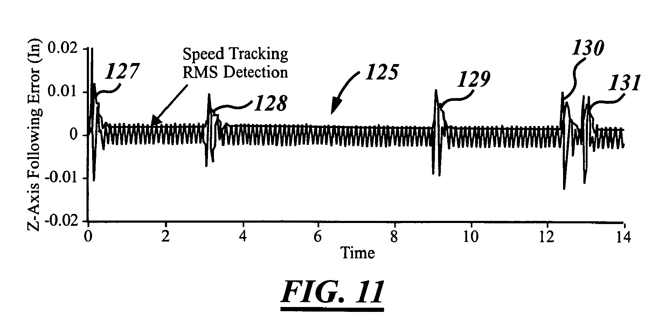

Figure 11 shows the signal of Figure 9 after filtering. The filtered signal 125 no longer contains the step offsets associated with Z-axis motion. The RMS signal is designated by the reference numeral 126. There are still transient oscillations 127-131 in the vicinity of Z-axis acceleration and deceleration, but the vibration amplitudes during constant Z-axis velocities are easily tracked.

Alarm processing can be performed on the filtered signal by monitoring Z-axis velocity, and performing a check to determine when the Z-axis is undergoing acceleration. As mentioned above, a pre-determined delay can be programmed to allow the transient to pass before comparing the RMS detection signal with the Z-error limit. Since it is not known what affect rotating cutter tooth impacts has on the Z-axis following signal, a check can also be made to determine what type of operation is being performed on the workpiece. An alarm is activated and a Z-axis feed-hold signal is generated if the vibration level exceeds a predetermined level.

The Z-axis following error signal appears to be the most noise free and most easily correlated, axis control indictor. However, other balance indicators could be developed from current draw, torque reading, or like parameters of the Z-axis servo motor 31, or the B-axis motor 26, or the like, or other suitable machine parameters. Since the Z-axis following error signal and the other machine parameters are already present in a standard machining center, there is no need for external devices such as accelerometers, or other current, torque, or other type measurement devices.

The invention has been described in terms of sensing vibration in a rotary table by means of the Z-axis following error signal. In the example shown, the Z-axis is the linear axis which carries the rotary table. For different machine configurations, the X or Y-axis may carry the rotary table, and for those configurations, table vibration would be sensed by means of the X or Y-axis following error signal.

Having thus described the invention, various modifications and alterations will occur to those skilled in the art, which modifications and alterations will be within the scope of the invention as defined by the appended claims.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method for detecting a load imbalance in a rotary table, or in a workpiece carried by a rotary table, in which the table is mounted for linear movement along a linear axis relative to machine tool, the method comprising the steps of:
using a position command signal to position the rotary table along said linear axis by means of a servo mechanism;
generating a position feedback signal indicative of the location of the rotary table after positioning by means of the servo mechanism;
generating a following error signal for said linear axis by subtracting the position feedback signal from the position command signal; and,
detecting disturbances in the following error signal indicative of the load imbalance.

2. A method for using a servo mechanism to detect a load imbalance in a rotary table, or in a workpiece carried by a rotary table, in which the table is mounted for linear movement along a linear axis relative to machine tool, the method comprising the steps of:
using a position command signal to the servo mechanism to position the rotary table along said linear axis;
using the servo mechanism to generate a position feedback signal indicative of the location of the rotary table after positioning by the servo mechanism;
generating a following error signal for said linear axis by subtracting the position feedback signal from the position command signal; and,
detecting disturbances in the following error signal indicative of the load imbalance.

3. A method of detecting an imbalance in a rotary table, in which the table is mounted for linear movement along a linear axis by means of a servo mechanism, the method comprising the steps of:
detecting the servo mechanism following error signal;
detecting a disturbance in the following error signal; and,
using the disturbance in the linear axis following error signal to indicate an imbalance in the rotary table.

4. The method of claim 3 further comprising the steps of:
setting a predetermined limit for the magnitude of allowable disturbance in the linear axis following error signal;
determining if the disturbance in the linear axis following error signal exceeds said predetermined limit as the rotational velocity of the table is increased; and,
generating an alarm if the disturbance in the linear axis following error signal exceeds said predetermined limit.

5. The method of claim 4 further comprising the steps of:
generating a velocity signal indicative of the speed of rotation of the rotary table;
comparing the velocity signal to a predetermined operational speed signal for the rotary table; and,
switching to a process monitor mode if the velocity signal exceeds the predetermined operational speed signal for the rotary table without generating an alarm.

6. A method of diagnosing an imbalance in a rotary table, in which the table is mounted for linear movement along a linear axis by means of a servo mechanism, the method comprising the steps of:
generating a signal indicative of the B-axis velocity of the rotary table;
generating a signal indicative of the B-axis position of the rotary table;
detecting the servo mechanism following error signal;
detecting a disturbance in the following error signal; and,
generating a signal indicative of the peaks of the linear axis following error signal and correlating said peaks with the signal indicative of the B-axis position of the rotary table.

7. The method of claim 6 further comprising the steps of:
generating a signal indicative of the amplitude of the peaks of the linear axis following error signal;
generating a phase display to indicate the phase of the imbalance and amplitude display to indicate the amplitude of the imbalance; and,
correlating the two displays to indicate the steps needed to balance the rotary table.

8. A method of monitoring a turning operation in which a workpiece is rotated by means of a rotary table, a cutting tool engages the workpiece while it is rotating, and the table is mounted for linear movement along a linear axis by means of a servo mechanism while the workpiece is rotating, the method comprising the steps of:
generating a signal indicative of the B-axis velocity of the rotary table;
using the servo mechanism to move the rotary table along said linear axis;
detecting the Z-axis velocity of the rotating table;
detecting the servo mechanism following error signal for motion of the rotary table along the linear axis;
providing a limit signal for the servo mechanism following error signal;
detecting a disturbance in the following error signal; and,
comparing the disturbance in the following error signal to the limit signal.

9. The method of claim 8 further comprising the steps of:
activating an alarm if the following error signal exceeds the limit signal.
